# FASCICULE DE BREVET EUROPEEN

(11) **EP 2 212 197 B1**
(45) Date de publication et mention de la délivrance du brevet: **12.01.2011**
(21) Numéro de dépôt: 08869368.4
(22) Date de dépôt: 10.10.2008
(51) Int. Cl.: B64C 27/10

(54) **ENGIN VOLANT A DEUX ROTORS**
DOPPELROTOR-FLUGGERÄT
TWIN ROTOR FLYING VEHICLE

(30) Priorité: 12.10.2007 FR 0758249
(43) Date de publication de la demande: 04.08.2010
(73) Titulaire: Infotron, 91300 Massy (FR)
(72) Inventeur: MONLEAU, Jean-Marie, F-05200 Les Orres (FR); VILBOIS, Vincent, F-78960 Voisins-le-Bretonneux (FR)
(74) Mandataire: Novagraaf Technologies
(86) Numéro de dépôt international: PCT/FR2008/001429
(87) Numéro de publication internationale: WO 2009/087292

(56) Documents cités:
- AT-B- 196 710
- DE-A1- 3 236 027
- DE-A1-102005 046 155
- FR-A- 2 859 455

## Description

La présente invention concerne, de façon générale, le domaine des engins volants comportant deux rotors contrarotatifs (tournant dans des sens de rotation opposés).

Plus particulièrement, l'invention concerne un engin volant comportant des premier et un second rotors montés respectivement à rotation selon des premier et second axes de rotation, le premier rotor comportant un premier groupe de pales s'étendant selon un premier plan de pales et le second rotor comportant un second groupe de pales s'étendant selon un second plan de pales, les premier et second rotors étant chacun entrainé à rotation par des moyens de motorisation de l'engin.

Les engins volants possédant deux rotors contrarotatifs présentent l'avantage par rapport aux engins volants à un seul rotor à axe vertical (hélicoptères classiques) de ne pas nécessiter de rotor supplémentaire anticouple pour contrôler le mouvement de lacet généré par la rotation du rotor à axe vertical.

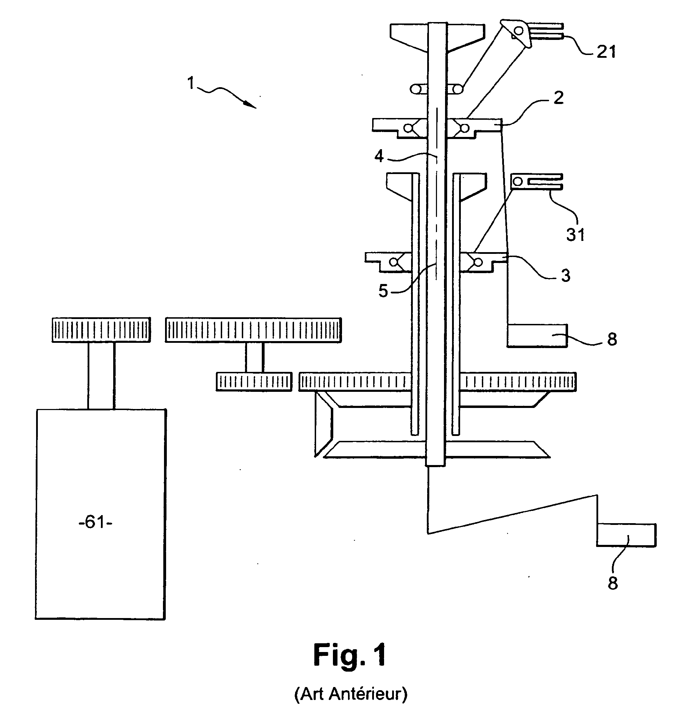

Un engin de l'art antérieur du type précédemment défini, est par exemple présenté sur la figure 1. Cet engin comporte deux rotors montés à rotation selon deux axes de rotation confondus. Chacun de ces rotors porte un groupe de pales à pas variables.

L'engin comporte un seul moteur pour entrainer à rotation chacun des deux rotors l'un des rotors possédant un arbre creux afin de laisser passer l'arbre d'entrainement à rotation du second rotor dans cet arbre creux, ces deux arbres tournant dans des sens opposés.

Il est également connu des documents brevet AT 196 710 B ; DE 32 36 027 A1 ; DE 10 2005 046155 A1 et FR 2 859 455 des engins volants.

Dans ce contexte, la présente invention a pour but de proposer un engin volant à deux rotors possédant une maniabilité accrue par rapport à l'engin volant de la figure 1.

A cette fin, les moyens de motorisation de l'engin volant de l'invention comportent au moins un moteur disposé entre lesdits rotors et entre lesdits premier et second plans de pales.

Le fait de placer le moteur entre les rotors et entre les plans de pales permet de rapprocher le centre de gravité de l'engin de l'espace situé entre les premier et second plans de pales et des axes de rotation des rotors.

De plus les masses de l'engin sont ainsi rapprochées de son centre de gravité qui se trouve entre les rotors et à proximité des axes de rotation de rotors. L'inertie de l'engin volant par rapport à son centre de gravité est donc réduite améliorant ainsi la manoeuvrabilité de l'engin.

Grâce à cette position relativement haute et centrée par rapport aux rotors du centre de gravité la manoeuvrabilité de l'engin est améliorée. De plus le fait que le moteur se trouve entre les plans de pales des rotors permet de réduire la prise au vent de l'engin en dehors de l'espace inter plans de pales, il en résulte une stabilité accrue de l'engin aux rafales de vent latéral.

On peut également faire en sorte que ledit au moins un moteur possède une taille et un emplacement tels qu'il (le moteur) est compris à l'intérieur d'un espace d'encombrement maximum de forme cylindrique coaxiale dudit premier axe de rotation et de rayon inférieur à deux tiers de longueur d'une pale dudit premier rotor.

Cette définition de l'encombrement maximum du moteur permet de préciser sa taille maximale et son emplacement vis-à-vis du premier rotor de manière à obtenir un engin volant suffisamment manoeuvrant.

L'espace situé entre les rotors, au niveau de leurs périphéries respectives (c'est-à-dire au niveau des extrémités de pales) est libre de tout obstacle de manière à permettre la circulation d'un flux d'air entre les rotors selon une direction parallèle à l'un au moins des plans de rotors (ce flux existe notamment lors des déplacements horizontaux de l'engin volant).

On peut également faire en sorte que l'engin comporte en outre un carter englobant lesdits moyens de motorisation de l'engin, ce carter étant compris à l'intérieur dudit espace d'encombrement maximum de forme cylindrique.

L'utilisation du carter qui est préférentiellement aérodynamique permet d'améliorer le rendement des rotors en termes de poussée verticale en limitant les perturbations entre ces rotors qui sont provoquées par la présence des moyens de motorisation.

On peut par exemple faire en sorte que les pales portées par les rotors soient des pales à pas variables.

Grâce au positionnement du moteur entre les plans de pales, il est plus facile de commander l'inclinaison des pales puisque les pales des deux rotors sont accessibles depuis l'espace inter plans de pales sans avoir à utiliser un mécanisme de commande de pas de pales traversant un rotor pour commander le pas des pales de l'autre rotor.

Ledit premier rotor comporte une première couronne qui s'étende autour dudit premier axe de rotation et qui soit liée en rotation selon le premier axe de rotation par rapport audit premier groupe de pales tout en étant mobile par rapport au premier groupe de pales, certaines au moins des pales du premier groupe de pales étant reliées mécaniquement à ladite première couronne de manière à ce que le déplacement relatif de cette première couronne par rapport au premier groupe de pales entraine une variation d'incidence des pales reliées mécaniquement à ladite première couronne par rapport audit premier axe de rotation.

Ledit second rotor comporte une seconde couronne qui s'étende autour dudit second axe de rotation et qui soit liée en rotation selon le second axe de rotation par rapport audit second groupe de pales tout en étant mobile par rapport au second groupe de pales, certaines au moins des pales du second groupe de pales étant reliées mécaniquement à ladite seconde couronne de manière à ce que le déplacement relatif de cette seconde couronne par rapport au second groupe de pales entraine une variation d'incidence des pales reliées mécaniquement à ladite seconde couronne par rapport audit second axe de rotation.

L'incidence d'une pale par rapport à l'axe de rotation du rotor auquel cette pale appartient est le pas de cette pale. Ce pas permet de déterminer la force de portance générée par cette pale lors de la rotation du rotor. L'utilisation d'une couronne pour commander l'incidence des pales d'un rotor est avantageuse car on peut contrôler le pas de chaque pale lors de sa rotation et donc la portance du rotor en orientant et en positionnant cette couronne par rapport au plan de pales du rotor auquel elle appartient.

On peut donc contrôler le pas collectif des pales de ce rotor et/ou le pas individuel de chaque pale de ce rotor par simple positionnement de la couronne.

Selon le mode de réalisation choisi, on peut :
- dans un premier cas faire en sorte que la première et/ou la seconde couronne soit (ent) montée(s) de manière à toujours s'étendre dans un/des plan(s) perpendiculaire(s) par rapport au premier et/ou au second axe(s), cette/ces couronne(s) étant alors uniquement mobile(s) en rotation selon le premier et / ou le second axe et mobile en translation selon ces mêmes premier et/ou second axes ;
- dans un second cas (alternatif au premier cas) faire en sorte que la première et/ou la seconde couronne soit (ent) montée(s) de manière rotulante autour d'un point d'axe propre à chaque couronne glissant selon ledit premier et/ou second axe.

Dans chacun de ces cas la première couronne est montée coulissante selon le premier axe et/ou la seconde couronne est montée coulissante selon le second axe.

Dans le premier cas la couronne se déplace uniquement en translation selon l'axe de rotation autour duquel elle s'étend et en rotation selon ce même axe.

Dans ce premier cas, le déplacement de la couronne entraine alors une variation de pas collectif des pales du groupe de pales auxquelles est reliée cette couronne. Ainsi à un instant donné toutes les pales d'un même groupe de pales auront un pas identique.

Dans le second cas la couronne se déplace :
- en translation selon l'axe de rotation autour duquel elle s'étend ;
- en rotation selon ce même axe et ;
- est capable de rotuler autour d'un point glissant le long de ce même axe.

Dans ce second cas, la couronne peut alors s'étendre dans un plan non parallèle au plan dans lequel s'étendent les pales d'un même groupe de pales.

Ainsi, le pas d'une pale d'un groupe de pales non parallèle à la couronne à laquelle il est lié peut varier au cours de la rotation du rotor. Dans ce cas toutes les pales de ce rotor n'ont donc pas forcément la même valeur de pas. L'inclinaison de la couronne par rapport au plan dans lequel s'étendent les pales permet de générer une différence de portance entre les cotés opposés du rotor ce qui génère un mouvement pivotement et d'avance de l'engin par simple inclinaison d'une couronne.

On peut par exemple faire en sorte que la liaison mécanique entre la première couronne et le premier groupe de pales comporte au moins une biellette de premier rotor et que la liaison mécanique entre la seconde couronne et le second groupe de pales comporte au moins une biellette de second rotor.

Lesdites première et seconde couronnes soient disposées entre lesdits premier et second plans.

Ce mode de réalisation permet de favoriser le positionnement du centre de gravité de l'engin entre les plans de pales ce qui en augmente la manoeuvrabilité.

Ce positionnement des première et seconde couronnes entre les plans des premier et second groupes de pales est avantageux car il permet de centraliser la commande d'orientation des pales des deux rotors dans une seule zone centrale de l'engin.

On peut par exemple faire en sorte que ledit moteur disposé entre lesdits premier et second plans de pales soit relié mécaniquement audits premier et second rotors de manière à les entrainer à rotation dans des sens respectivement opposés.

Ce mode de réalisation permet d'obtenir une variation de vitesse des rotors synchronisée en ne contrôlant la vitesse que d'un moteur.

Alternativement à ce dernier mode de réalisation on peut par exemple faire en sorte que l'engin volant comporte des premier et second moteurs disposés entre lesdits premier et second rotors, le premier moteur étant relié au premier rotor de manière à l'entrainer à rotation selon le premier axe de rotation et le second moteur étant relié au second rotor de manière à l'entrainer à rotation selon le second axe de rotation.

Ce mode de réalisation permet de contrôler indépendamment la vitesse de rotation de chaque rotor en ajustant la vitesse de chaque moteur.

On peut par exemple faire en sorte que lesdites première et seconde couronnes soient reliées entre elles à l'aide d'un moyen mécanique de liaison des couronnes adapté pour les maintenir parallèles entre elles.

Grâce à un tel moyen de liaison des couronnes, les couronnes sont toujours orientées parallèlement entre elles y compris lors de leurs déplacements par rapport aux premier et/ou second axes de rotation, il en résulte une symétrie de variation des pas de pales sur les deux rotors. Ainsi la variation de pas d'un rotor est accompagnée d'une variation de pas sur l'autre rotor ce qui limite les effets de lacet de l'engin involontaires consécutifs à une variation de pas.

Un tel moyen de liaison des couronnes est par exemple constitué par plusieurs tringles associant les couronnes entre elles de manière à ce qu'elles restent toujours parallèles entre elles durant leurs déplacements.

Ce moyen de liaison des couronnes peut également être constitué par :
- un premier groupe de servomoteurs asservis en position pour commander le positionnement de la première couronne ;
- un second groupe de servomoteurs asservis en position pour commander le positionnement de la seconde couronne et ;
- une commande électronique d'asservissement adaptée pour asservir simultanément les servomoteurs des premier et second groupes de manière à ce que ceux-ci garantissent que les première et seconde couronnes soient positionnées parallèlement entre elles.

On peut par exemple faire en sorte que l'engin volant comporte au moins un servomoteur adapté pour commander le déplacement de l'une au moins des dites couronnes.

On peut par exemple faire en sorte que lesdits premier et second rotors soient creux et que l'engin comporte un mat s'étendant au travers des creux des premier et second rotors.

Ce mode de réalisation avec un mat traversant les deux rotors permet d'avoir une rigidité de structure de l'engin qui favorise la précision de commande de l'engin.

D'autres caractéristiques et avantages de l'invention ressortiront clairement de la description qui en est faite ci-après, à titre indicatif et nullement limitatif, en référence aux dessins annexés, dans lesquels:
la figure 1 représente une vue schématique d'un engin volant de l'art antérieur doté d'un moteur positionné sous les rotors ;
la figure 2 représente une vue schématique d'un engin volant selon l'invention doté d'un seul moteur pour entrainer les deux rotors ;
la figure 3 représente une vue schématique d'un engin volant selon l'invention doté de deux moteurs entrainant chacun un rotor ;
la figure 4 représente une vue en perspective de l'engin volant de l'invention ;

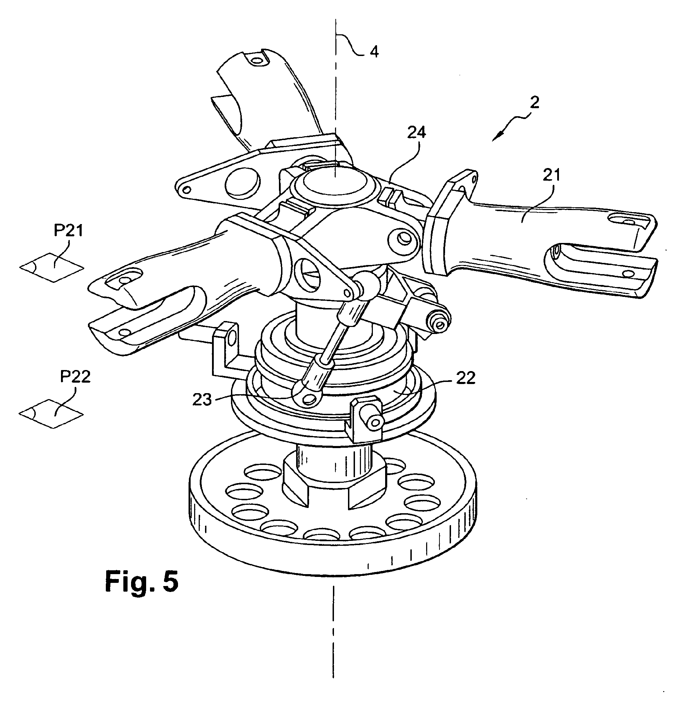

la figure 5 représente une vue en perspective détaillée du premier rotor de l'engin volant de l'invention ;
la figure 6a est une vue en perspective de l'engin volant de l'invention doté d'un carter disposé autour des moyens de motorisation ;
les figures 6b et 6c sont des vues respectivement de côté et de dessus de l'engin de la figure 6a.

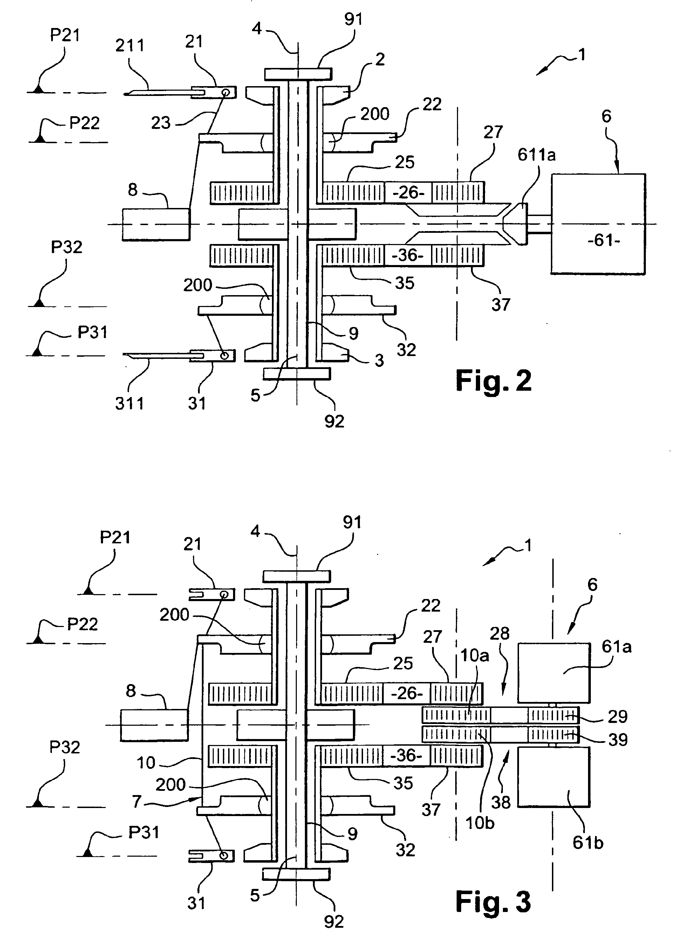

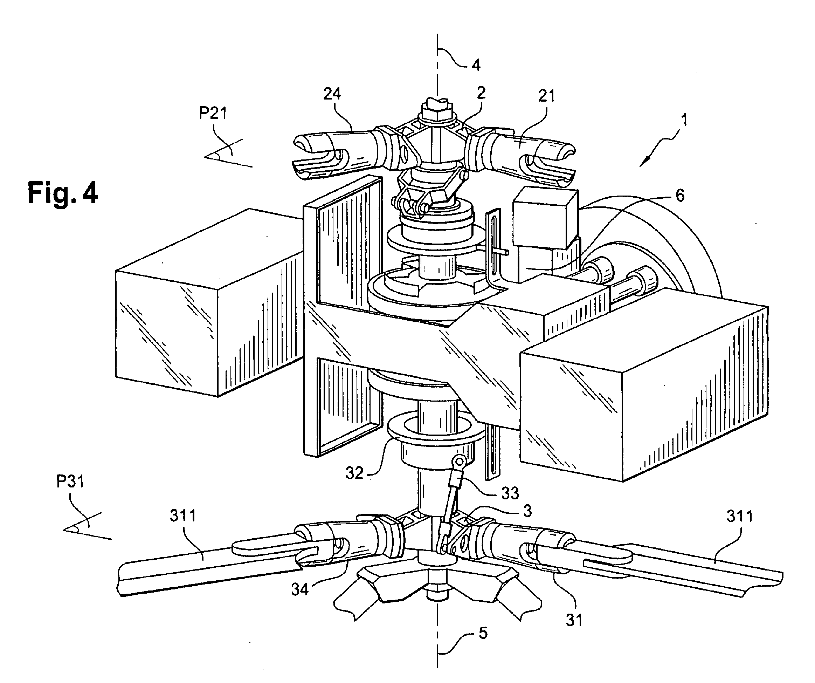

L'engin volant 1 des figures 2, 3, et 4 comporte des premier et second rotors 2, 3 montés respectivement à rotation selon des premier et second axes de rotation 4, 5 qui sont sensiblement confondus entre eux.

Le premier rotor 2 porte un premier groupe de pales 21 s'étendant selon un premier plan de pales P21 qui est sensiblement perpendiculaire au premier axe de rotation 4.

Le second rotor 3 porte un second groupe de pales 31 s'étendant selon un second plan de pales P31 qui est sensiblement perpendiculaire au second axe de rotation 5.

Le premier rotor 2 comporte une pièce 24 de support des pales 211 du premier groupe de pales 21. De manière symétrique le second rotor 3 comporte une pièce 34 de support des pales 311 du second groupe de pales 31.

Chacune des pales 211 du premier groupe de pales 21 est montée à rotation sur la pièce de support 24 selon un axe de rotation propre à chaque pale, chacun des axes de rotation propre à chaque pale s'étendant sensiblement dans le plan de pales P21.

De manière symétrique, chacune des pales 311 du second groupe de pales 31 est montée à rotation sur la pièce de support 34 selon un axe de rotation propre à chaque pale 311, chacun des axes de rotation propre à chaque pale s'étendant sensiblement dans le plan de pales P31.

Les premier et second groupes de pales ont un même nombre de pales (en l'occurrence 3 pales par rotor) et ces pales sont choisies pour que les efforts de portance générés par les pales du premier groupe soient sensiblement équivalents aux efforts de portance générés par les pales du second groupe de pales pour des vitesses de rotations des rotors équivalentes.

Les premier et second rotors 2, 3 sont entrainés à rotation par des moyens de motorisation 6 de l'engin 1 qui sont positionnés entre les premier et second plans de pales P21, P31. Ces moyens de motorisation 6 comportent soit un seul moteur (61) entrainant les deux rotors 2, 3 comme sur la figure 2 soit deux moteurs 61a et 61b entrainant chacun un seul des deux rotors 2, 3.

Les premier et second rotors 2, 3 sont creux, ces creux formés dans les rotors sont débouchants de telle manière que chacun des deux rotors 2, 3 soit complètement traversé par un mat 9 servant de structure à l'engin.

Les moyens de motorisation 6 sont supportés par le mat 9 et les extrémités du mat 9 servent d'interface de charges 91, 92 pour la fixation de la charge utile de l'engin.

Idéalement le mat 9 est creux pour permettre le passage de câblages des équipements situés au dessus et au dessous de l'engin 1. Cette architecture permet de concentrer toute la chaîne cinématique, la motorisation ainsi que l'électronique de pilotage dans un volume de révolution de forme ovoïde situé entre les rotors.

Le premier rotor 2 comporte une première couronne 22 s'étendant autour dudit premier axe de rotation 4, cette couronne étant indexée en rotation avec le premier groupe de pales 21 selon le premier axe de rotation 4.

Cette première couronne 22 est en outre mobile en translation vis-à-vis du premier groupe de pales 21 selon ledit premier axe de rotation 4.

Les pales 211 du premier groupe de pales 21 sont reliées mécaniquement à ladite première couronne 22 via des biellettes de premier rotor 23. Chacune de ces biellettes 23 est articulée à une extrémité sur un point de la première couronne 22 et à une autre extrémité sur un point d'une pale 211 qui est distant de l'axe de rotation propre de cette pale 211.

De cette manière le déplacement relatif de la première couronne 22 par rapport au premier groupe de pales 21 entraine une variation d'incidence des pales 211 reliées par les biellettes.

Le second rotor 3 comporte une seconde couronne 32 s'étendant autour dudit second axe de rotation 5, cette couronne 32 étant indexée en rotation avec le second groupe de pales 31 selon le second axe de rotation 4.

Cette seconde couronne 32 est en outre mobile en translation vis-à-vis du second groupe de pales 31 selon ledit second axe de rotation 5.

Les pales 311 du second groupe de pales 31 sont reliées mécaniquement à ladite seconde couronne 32 via des biellettes de second rotor 33. Chacune de ces biellettes de second rotor 23 est articulée à une extrémité sur un point de la seconde couronne 32 et à une autre extrémité sur un point d'une pale 311 qui est distant de l'axe de rotation propre de cette pale 311.

De cette manière le déplacement relatif de la première couronne 22 par rapport au premier groupe de pales 21 entraine une variation d'incidence des pales 211 reliées par les biellettes 23.

Les première et seconde couronnes ont des formes de disques plans qui sont communément appelés plateaux cycliques dans le domaine de la construction de rotors pour hélicoptères.

Ces première et seconde couronnes 22, 32 sont disposées entre lesdits premier et second plans de pales P21, P31 et leurs positions respectives vis-à-vis des premier et second groupes de pales 21, 31 sont générées à l'aide de servomoteurs 8 implantés dans l'espace inter plans de pales P21, P31.

Les première et seconde couronnes 22 et 32 s'étendent respectivement dans des plans de première et seconde couronnes respectifs P22 et P32. Des moyens mécaniques de liaison des couronnes 7 permettent de faire en sorte que les couronnes restent toujours parallèles entre elles et cela même si ces couronnes sont déplacées et/ou orientées vis-à-vis des plans de pales P22, P32.

Dans le mode de réalisation de la figure 2, l'engin 1 comporte un seul moteur 61 pour entrainer les deux rotors 2, 3 à rotation dans des sens inverses. Ce moteur 61 est un moteur thermique et les vitesses de rotation des rotors sont alors identique entre elles (en valeur absolue) et sont de sens de rotation opposés.

Dans ce mode de réalisation de la figure 2, la variation de la portance totale de l'engin et ou son mouvement de lacet se fait principalement en variant l'angle des pales plutôt qu'en variant la vitesse de rotation du moteur 61. Il est en effet plus facile de réguler l'angle d'incidence des pales que de réguler précisément des variations de vitesse d'un moteur thermique. Le moteur thermique est donc préférentiellement régulé pour tourner à une vitesse constante.

Dans ce mode de réalisation le premier rotor 2 porte une poulie d'entrainement 25 du premier rotor 2 axée selon le premier axe de rotation 4 et le second rotor 3 porte une poulie d'entrainement 35 du second rotor 3 axée selon le second axe de rotation 5.

Une courroie de premier rotor 26 est en prise entre la poulie d'entrainement 25 et une première poulie intermédiaire 27, cette dernière étant pourvue d'un engrenage conique engrenant sur un pignon 611 de bout d'arbre du moteur 61.

De manière symétrique une courroie de second rotor 36 est en prise entre la poulie d'entrainement 35 et une seconde poulie intermédiaire 37, cette dernière étant également pourvue d'un engrenage conique engrenant sur le pignon 611 de bout d'arbre du moteur 61.

Dans ce mode de réalisation chaque couronne comporte une rotule centrale 200 propre comprenant un passage de tube d'axe de rotation de rotor. Chacune de ces rotules centrales permet à la couronne de rotuler autour d'un point par lequel passe l'axe de rotation de rotor 4, 5. Ces passages de tubes formés dans les rotules centrales permettent à ces rotules de coulisser le long des axes de rotation de rotor 4, 5.

Trois servomoteurs 8 sont agencés à 120° à la périphérie de la première couronne 22. De même trois autres servomoteurs 8 sont agencés à 120° à la périphérie de la seconde couronne 32. Ces groupes de servomoteurs permettent de commander la distance entre chaque couronne 22, 32 et le plan de pales P21, P31 du rotor portant cette couronne ainsi que l'orientation de plan de couronne P22 et P32 vis-à-vis de ce plan de pales P21, P31.

Le positionnement de chaque couronne est donc commandé par un calculateur électronique relié aux six servomoteurs 8.

Ce calculateur est programmé de manière à ce que les plans de couronnes P22 et P32 soient toujours parallèles entre eux. Ces servomoteurs permettent de générer un différentiel de collectif (différentiel de pas collectif entre les rotors) qui génère ou non un couple de lacet. La défaillance d'un servomoteur n'entraine pas de chute de l'appareil puisque le calculateur peut toujours commander le pas collectif du rotor dont les servomoteurs fonctionnent correctement.

La figure 3 présente un mode de réalisation de l'invention alternatif de celui de la figure 2. Ici, l'engin possède deux moteurs 61a et 61b entrainant chacun un seul rotor 2, 3, ces rotors tournant dans des sens opposés. Ces premier et second moteurs 61a, 61b sont disposés entre lesdits premier et second rotors 2, 3 et entre les plans P21 et P31. Dans ce mode de réalisation les moteurs 61a et 61b sont électriques et les vitesses de rotations respectives des rotors sont ajustées en régulant chaque moteur 61a, 61b.

La force de portance de l'engin et le mouvement de lacet dépendent des vitesses de rotation respectives des moteurs et des incidences respectives des pales des rotors.

La vitesse de chaque moteur électrique 61a, 61b ainsi que ses accélérations et décélérations pouvant être contrôlées précisément, il est dès lors aisé de maitriser :
- le lacet de l'engin en jouant sur le différentiel de vitesse de rotation entre les rotors et ;
- le mouvement de déplacement vertical de l'engin en jouant sur les vitesses des deux moteurs.

Grâce à ces moteurs qui permettent de gérer à eux seuls les mouvements de lacet, les couronnes peuvent être liées entre elles en translation selon les axes de rotor 4 et 5 de manière à ce qu'elles se déplacent toujours simultanément. Cette possibilité est celle présentée sur la figure 3 où des tringles de liaison 10 relient les couronnes entre elles.

Dans ce mode de réalisation on peut utiliser 3 servomoteurs 8 répartis à 120° sur la périphérie de l'une des couronnes pour commander le déplacement simultané des deux couronnes. Dans ce cas il n'y a pas de commande de différentiel de collectif puisque le pas collectif des pales du premier rotor 2 est toujours égal au pas collectif des pales du second rotor 3. Ce mode de réalisation permet de n'avoir plus que 3 servomoteurs ce qui est économique.

Dans un mode alternatif on utilisera uniquement 2 servo moteurs montés à la périphérie de l'une des couronnes tout en utilisant une buté fixe en périphérie de cette même couronne. Les deux servomoteurs permettant de déplacer cette couronne vis-à-vis de cette buté fixe et de l'incliner par rapport à cette buté.

Dans un dernier mode de réalisation alternatif on utilise 6 servomoteurs (3 par couronne placés à sa périphérie et positionnés à 120° les uns des autres) couplés avec un ou deux moteurs électriques 61 et dans ce cas les couronnes sont mobiles en translation indépendamment l'une de l'autre (aucune tringle n'est alors utilisée).

Ce dernier mode de réalisation est particulièrement tolérant aux pannes des servomoteurs et les servomoteurs sont moins sollicités mécaniquement que dans les autres modes de réalisations. La sûreté de fonctionnement est donc meilleure.

Enfin comme présenté sur la figure 3, l'engin volant de l'invention peut en outre comporter un étage de réduction de vitesse 28, 38 interposé entre chaque poulie intermédiaire 27, 37 et le ou les arbres du ou des moteurs.

L'étage de réduction comporte une première poulie menée 100a, 100b assemblée sur la poulie intermédiaire 27, 37 et l'arbre de chaque moteur possède une poulie de bout d'arbre 29, 39 en prise avec la poulie intermédiaire via une courroie de transmission. Ce mode de réalisation est utilisé par exemple lorsque l'engin comporte deux moteurs.

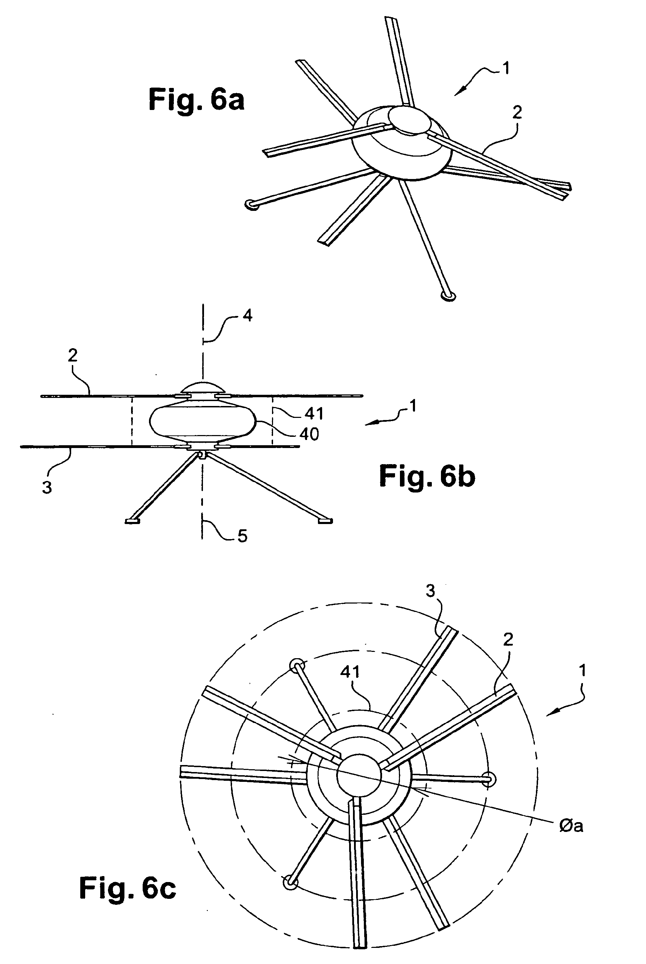

Comme on le voit sur les figures 6a à 6c l'engin volant 1 possède un carter 40 (préférentiellement aérodynamique) englobant complètement les moyens de motorisation qui comprennent en l'occurrence deux moteurs.

Pour obtenir une performance en vol de l'engin on fait en sorte que ce carter et donc les moyens de motorisation qu'il englobe soient compris à l'intérieur d'un espace d'encombrement cylindrique 41 le plus réduit possible et dont le rayon est en l'occurrence inférieur à deux tiers de longueur de pale.

## Revendications

1. Engin volant (1) comportant des premier et un second rotors (2, 3) montés respectivement à rotation selon des premier et second axes de rotation (4, 5), le premier rotor (2) comportant un premier groupe de pales (21) s'étendant selon un premier plan de pales (P21) et le second rotor (3) comportant un second groupe de pales (31) s'étendant selon un second plan de pales (P31), les premier et second rotors (2, 3) étant chacun entrainé à rotation par des moyens de motorisation de l'engin (6), lesdits moyens de motorisation (6) comportant au moins un moteur (61) disposé entre lesdits rotors et entre lesdits premier et second plans de pales (P21, P31),
- ledit premier rotor (2) comportant une première couronne (22) qui s'étend autour dudit premier axe de rotation (4) et qui est liée en rotation selon le premier axe de rotation (4) par rapport audit premier groupe de pales (21) tout en étant mobile par rapport au premier groupe de pales (21), certaines au moins des pales (211) du premier groupe de pales (21) étant reliées mécaniquement à ladite première couronne (22) de manière à ce que le déplacement relatif de cette première couronne (22) par rapport au premier groupe de pales (21) entraine une variation d'incidence des pales (211) reliées mécaniquement à ladite première couronne (22) par rapport audit premier axe de rotation (4) ;
- ledit second rotor (3) comportant une seconde couronne (32) qui s'étend autour dudit second axe de rotation (5) et qui est liée en rotation selon le second axe de rotation (5) par rapport audit second groupe de pales (31) tout en étant mobile par rapport au second groupe de pales (31), certaines au moins des pales (311) du second groupe de pales (31) étant reliées mécaniquement à ladite seconde couronne (32) de manière à ce que le déplacement relatif de cette seconde couronne (32) par rapport au second groupe de pales (31) entraine une variation d'incidence des pales (311) reliées mécaniquement à ladite seconde couronne (32) par rapport audit second axe de rotation (5), **caractérisé en ce que** lesdites première et seconde couronnes (22, 32) sont disposées entre lesdits premier et second plans de pales (P21, P31).

2. Engin volant (1) selon la revendication 1, **caractérisé en ce que** ledit au moins un moteur (61) possède une taille et un emplacement tels qu'il est compris à l'intérieur d'un espace d'encombrement maximum de forme cylindrique (41) coaxiale dudit premier axe de rotation (4) et de rayon inférieur à deux tiers de longueur d'une pale du dit premier rotor.

3. Engin selon l'une quelconque des revendications 1 ou 2, **caractérisé en ce que** les pales (211, 311) portées par les rotors (2, 3) sont des pales à pas variables.

4. Engin selon l'une au moins des revendications précédentes, **caractérisé en ce que** la liaison mécanique entre la première couronne (22) et le premier groupe de pales (21) comporte au moins une biellette (23) de premier rotor et **en ce que** la liaison mécanique entre la seconde couronne (32) et le second groupe de pales (31) comporte au moins une biellette (33) de second rotor.

5. Engin selon l'une quelconque des revendications précédentes, **caractérisé en ce que** ledit moteur (61) disposé entre lesdits premier et second plans de pales (P21, P31) est relié mécaniquement audits premier et second rotors (2, 3) de manière à les entrainer à rotation dans des sens respectivement opposés.

6. Engin selon l'une quelconque des revendications 1 à 5, **caractérisé en ce qu'**il comporte des premier et second moteurs (61a, 61b) disposés entre lesdits premier et second rotors (2, 3), le premier moteur (61a) étant relié au premier rotor (2) de manière à l'entrainer à rotation selon le premier axe de rotation (4) et le second moteur (61b) étant relié au second rotor (3) de manière à l'entrainer à rotation selon le second axe de rotation (5).

7. Engin selon l'une quelconque des revendications 1 à 6, **caractérisé en ce que** lesdites première et seconde couronnes (22, 32) sont reliées entre elles à l'aide d'un moyen mécanique de liaison des couronnes (7) adapté pour les maintenir parallèles entre elles.

8. Engin selon l'une quelconque des revendications précédentes, **caractérisé en ce que** lesdits premier et second rotors (2, 3) sont creux et **en ce que** l'engin comporte un mat (9) s'étendant au travers des creux des premier et second rotors (2, 3).

9. Engin selon l'une quelconque des revendications 3-8 combinée à la revendication 2, **caractérisé en ce qu'**il comporte en outre un carter (40) englobant lesdits moyens de motorisation de l'engin, ce carter étant compris à l'intérieur du dit espace d'encombrement maximum de forme cylindrique (41).

10. Engin selon l'une quelconque des revendications précédentes, **caractérisé en ce qu'**il comporte des servomoteurs (8) implantés dans l'espace inter plans de pales (P21, P31) de manière à ce que les positions respectives des première et seconde couronnes (22, 32) vis-à-vis des premier et second groupes de pales (21, 31) soient générées à l'aide desdits servomoteurs (8).

## Claims

1. Flying machine (1) comprising first and a second rotors (2, 3) mounted respectively so that they rotate about first and second axes of rotation (4, 5), the first rotor (2) comprising a first group of blades (21) extending in a first blade plane (P21) and the second rotor (3) comprising a second group of blades (31) extending in a second blade plane (P31), the first and second rotors (2, 3) each being driven in their rotation by drive means of the machine (6), the said drive means (6) comprising at least one engine (61) positioned between the said rotors and between the said first and second blade planes (P21, P31),
- the said first rotor (2) comprising a first ring (22) which extends around the said first axis of rotation (4) and which is connected in terms of rotation about the first axis of rotation (4) with respect to the said first group of blades (21) while at the same time being able to move with respect to the first group of blades (21), at least some of the blades (211) of the first group of blades (21) being mechanically connected to the said first ring (22) so that relative movement of this first ring (22) with respect to the first group of blades (21) leads to a variation in the angle of incidence of the blades (211) mechanically connected to the said first ring (22) with respect to the said first axis of rotation (4);
- the said second rotor (3) comprising a second ring (32) which extends around the said second axis of rotation (5) and which is connected in terms of rotation about the second axis of rotation (5) with respect to the said second group of blades (31) while at the same time being able to move with respect to the second group of blades (31), at least some of the blades (311) of the second group of blades (31) being mechanically connected to the said second ring (32) so that relative movement of this second ring (32) with respect to the second group of blades (31) leads to a variation in the angle of incidence of the blades (311) mechanically connected to the said second ring (32) with respect to the said second axis of rotation (5), **characterized in that** the said first and second rings (22, 32) are positioned between the said first and second blade planes (P21, P31).

2. Flying machine (1) according to Claim 1, **characterized in that** the said at least one engine (61) is sized and located such that it is contained inside a space the maximum envelope dimensions of which are cylindrical in shape (41) coaxial with the said first axis of rotation (4) and the radius of which is smaller than two-thirds of the length of a blade of the said first rotor.

3. Machine according to either one of Claims 1 and 2, **characterized in that** the blades (211, 311) supported by the rotors (2, 3) are variable-pitch blades.

4. Machine according to at least one of the preceding claims, **characterized in that** the mechanical connection between the first ring (22) and the first group of blades (21) comprises at least one first rotor link rod (23) and **in that** the mechanical connection between the second ring (32) and the second group of blades (31) comprises at least one second rotor link rod (33).

5. Machine according to any one of the preceding claims, **characterized in that** the said engine (61) positioned between the said first and second blade planes (P21, P31) is mechanically connected to the said first and second rotors (2, 3) in such a way as to drive them in rotation in respectively opposite directions.

6. Machine according to any one of Claims 1 to 5, **characterized in that** it comprises first and second engines (61a, 61b) positioned between the said first and second rotors (2, 3), the first engine (61a) being connected to the first rotor (2) so as to drive it in rotation about the first axis of rotation (4), and the second engine (61b) being connected to the second rotor (3) in such a way as to drive it in rotation about the second axis of rotation (5).

7. Machine according to any one of Claims 1 to 6, **characterized in that** the said first and second rings (22, 32) are joined together using a mechanical means of connecting the rings (7) which is designed to keep these mutually parallel.

8. Machine according to any one of the preceding claims, **characterized in that** the said first and second rotors (2, 3) are hollow and **in that** the machine comprises a mast (9) extending through the hollows of the first and second rotors (2, 3).

9. Machine according to any one of Claims 3-8 combined with Claim 2, **characterized in that** it further comprises a casing (40) enclosing the said machine drive means, this casing being contained inside the said maximum envelope of cylindrical shape (41).

10. Machine according to any one of the preceding claims, **characterized in that** it comprises servomotors (8) installed in the space between the blade planes (P21, P31) so that the respective positions of the first and second rings (22, 32) with respect to the first and second groups of blades (21, 31) are generated using the said servomotors (8).

## Patentansprüche

1. Fluggerät (1) mit einem ersten und einem zweiten Rotor (2, 3), die jeweils zur Rotation um eine erste und zweite Rotationsachse (4, 5) montiert sind, wobei der erste Rotor (2) eine erste Gruppe von Rotorblättern (21) umfasst, die sich in einer ersten Blätterebene (P21) erstrecken, und der zweite Rotor (3) eine zweite Gruppe von Rotorblättern (31) umfasst, die sich in einer zweiten Blätterebene (P31) erstrecken, wobei der erste und zweite Rotor (2, 3) jeweils durch eine Motorantriebseinrichtung (6) in Drehung versetzt werden, wobei die Motoreinrichtung (6) wenigstens einen Motor (61) umfasst, der zwischen den Rotoren und zwischen der ersten und zweiten Blätterebene (P21, P31) angeordnet ist,
- wobei der erste Rotor (2) einen ersten Zahnkranz (22) umfasst, der sich um die erste Rotationsachse (4) herum erstreckt und der mit der ersten Rotationsachse (4) in Bezug zu der ersten Blättergruppe (21) drehverbunden aber in Bezug zu der ersten Blättergruppe (21) beweglich ist, wobei wenigstens einige der Rotorblätter (211) der ersten Blättergruppe (21) mechanisch mit dem ersten Zahnkranz (22) so verbunden sind, dass die Relativverschiebung dieses ersten Zahnkranzes (22) in Bezug zu der ersten Blättergruppe (21) eine Veränderung der Anstellung der Rotorblätter (211), die mechanisch mit dem ersten Zahnkranz (22) verbunden sind, in Bezug zu der ersten Rotationsachse (4) mit sich bringt;
- wobei der zweite Rotor (3) einen zweiten Zahnkranz (32) aufweist, der sich um die zweite Rotationsachse (5) erstreckt und der drehbar um die zweite Rotationsachse (5) in Bezug zu der zweiten Blättergruppe (31) aber beweglich in Bezug auf die zweite Blättergruppe (31) verbunden ist, wobei wenigstens einige der Rotorblätter (311) der zweiten Blättergruppe (31) mechanisch mit dem zweiten Zahnkranz (32) so verbunden sind, dass die Relativverschiebung des zweiten Zahnkranzes (32) in Bezug zu der zweiten Blättergruppe (31) eine Veränderung der Anstellung der Blätter (311), die mechanisch mit dem zweiten Zahnkranz (32) verbunden sind, in Bezug zu der zweiten Rotationsachse (5) mit sich bringt, **dadurch gekennzeichnet, dass** der erste und der zweite Zahnkranz (22, 32) zwischen der ersten und der zweiten Blätterebene (P21, P31) angeordnet sind.

2. Fluggerät (1) nach Anspruch 1, **dadurch gekennzeichnet, dass** der wenigstens eine Motor (61) eine solche Größe und einen solchen Platz einnimmt, dass dieser im Inneren eines zylinderförmigen maximalen Aufnahmeraums (41) koaxial zu der ersten Rotationsachse (4) und mit einem kleineren Radius als zwei Drittel der Länge eines Blattes dieses ersten Rotors enthalten ist.

3. Gerät nach einem der Ansprüche 1 oder 2, **dadurch gekennzeichnet, dass** die durch die Rotoren (2, 3) getragenen Blätter (211, 311) Blätter mit variabler Steigung sind.

4. Gerät nach wenigstens einem der vorhergehenden Ansprüche, **dadurch gekennzeichnet, dass** die mechanische Verbindung zwischen dem ersten Zahnkranz (22) und der ersten Blättergruppe (21) wenigstens einen Schwingarm (23) des ersten Rotors umfasst, und dass die mechanische Verbindung zwischen dem zweiten Zahnkranz (32) und der zweiten Blättergruppe (31) wenigstens einen Schwingarm (33) des zweiten Rotors umfasst.

5. Gerät nach einem der vorhergehenden Ansprüche, **dadurch gekennzeichnet, dass** der Motor (61), der zwischen der ersten und zweiten Blätterebene (P21, P31) angeordnet sind, mechanisch mit dem ersten und zweiten Rotor (2, 3) verbunden ist, derart, dass diese in jeweils entgegengesetzten Richtungen in Drehung versetzt werden.

6. Gerät nach einem der Ansprüche 1 bis 5, **dadurch gekennzeichnet, dass** dieses einen ersten und zweiten Motor (61a, 61b) umfasst, die zwischen dem ersten und zweiten Rotor (2, 3) angeordnet sind, wobei der erste Motor (61a) mit dem ersten Rotor (2) so verbunden ist, dass dieser um die erste Rotationsachse (4) in Drehung versetzt wird, und der zweite Motor (61b) mit dem zweiten Rotor (3) derart verbunden ist, dass dieser um die zweite Rotationsachse (5) in Drehung versetzt wird.

7. Gerät nach einem der Ansprüche 1 bis 6, **dadurch gekennzeichnet, dass** der erste und zweite Zahnkranz (22, 32) untereinander mithilfe eines mechanischen verbindungsmittels (7) für Zahnkränze verbunden sind, das so ausgebildet ist, dass diese untereinander parallel gehalten werden.

8. Gerät nach einem der vorhergehenden Ansprüche, **dadurch gekennzeichnet, dass** der erste und zweite Rotor (2, 3) hohl sind und dass das Gerät einen Stiel (9) aufweist, der sich quer zu den Ausnehmungen des ersten und zweiten Rotors (2,3) erstreckt.

9. Gerät nach einem der Ansprüche 3 bis 8, kombiniert mit Anspruch 2, **dadurch gekennzeichnet, dass** dieses ferner ein Gehäuse (40) umfasst, das die Motorisierungsmittel des Gerätes einschließt, wobei dieses Gehäuse im Inneren des zylinderförmigen maximalen Aufnahmeraums (41) enthalten ist.

10. Gerät nach einem der vorhergehenden Ansprüche, **dadurch gekennzeichnet, dass** dieses Servomotoren (8) umfasst, die in dem Raum zwischen den Blätterebenen (P21, P31) derart eingebaut sind, dass die jeweiligen Positionen des ersten und zweiten Zahnkranzes (22, 32) gegenüber der ersten und zweiten Blättergruppe (21, 31) mithilfe der Servomotoren (8) erzeugt werden.
